# EUROPEAN PATENT SPECIFICATION

(11) **EP 3 610 156 B1**
(45) Date of publication and mention of the grant of the patent: **21.07.2021**
(21) Application number: 18721576.9
(22) Date of filing: 11.04.2018
(51) Int. Cl.: F04D 29/08, F04D 29/28

(54) **SEALING ASSEMBLY FOR CENTRIFUGAL COMPRESSOR AND CENTRIFUGAL COMPRESSOR HAVING THE SAME**
DICHTUNGSANORDNUNG FÜR RADIALVERDICHTER UND RADIALVERDICHTER DAMIT
ENSEMBLE ÉTANCHÉITÉ POUR COMPRESSEUR CENTRIFUGE ET COMPRESSEUR CENTRIFUGE COMPRENANT CELUI-CI

(30) Priority: 14.04.2017 CN 201710243405
(43) Date of publication of application: 19.02.2020
(73) Proprietor: Carrier Corporation, Jupiter, FL 33478 (US)
(72) Inventor: TIAN, Ye, Shanghai 201206 (CN); SISHTLA, Vishnu M., Manlius, New York 13104 (US)
(74) Representative: Dehns
(86) International application number: PCT/US2018/027056
(87) International publication number: WO 2018/191351

(56) References cited:
- EP-A1- 0 567 123
- US-A1- 2007 065 276
- US-A1- 2010 215 506
- US-A1- 2014 017 099
- US-A1- 2016 195 100

## Description

The present invention relates to the field of compressors, and more specifically, to a seal assembly for use in a centrifugal compressor.

At present, in order to ensure the sealing performance between various parts in a centrifugal compressor, a seal assembly is usually provided between the parts so as to form a sealing surface therebetween. For example, as an example, in a design scheme, a seal assembly is provided on the side of a gimbal of a centrifuge impeller. At this moment, it is possible to provide a sealing ring on the gimbal end face and provide a sealing tooth on a contact surface of the sealing ring with the gimbal, thus forming a sealing surface between the sealing tooth and the gimbal.

An alternative sealing assembly for centrifugal compressors is known from US2016/195100 A1.

Such sealing surface is limited by the size of the sealing section and the size of the sealing clearance between the sealing tooth and the gimbal and can only bring the sealing effect of average reliability. Whereas if a seal failure occurs, the high-pressure refrigerant at the outlet of the impeller will be leaked through the sealing clearance to the impeller back side where the pressure is relatively low, which will reduce the efficiency of the centrifugal compressor, and even cause potential safety hazard.

It can be known, according to the design principle of sealing, that the sealing performance can be improved both by increasing the sealing section and by reducing the sealing clearance. However, in fact, it is difficult to further improve the sealing performance of a current structure based on the previously stated principle. On the one hand, confined to the assembly space, it is difficult to increase the sealing surface between the gimbal and the sealing ring by increasing the length of the gimbal along the axial direction. On the other hand, because the sealing tooth and the gimbal have similar material hardness, if the two are fully contacted or too close, severe abrasion or safety problems will be caused. Therefore, for safety reasons, the static clearance between the sealing tooth on the sealing ring and the gimbal can no longer be reduced.

An objective of at least preferred embodiments of the present invention is to provide a seal assembly having a smaller sealing clearance for use in a centrifugal compressor.

Another objective of at least preferred embodiments of the present invention is to provide a centrifugal compressor having improved sealing performance.

According to a first aspect of the present invention, a seal assembly for use in a centrifugal compressor is provided, the centrifugal compressor including an impeller and a housing, wherein the impeller includes a gimbal, provided on the back of the impeller, having an inner diameter and an outer diameter, characterized in that the seal assembly includes a sealing section, the sealing section including a sealing tooth formed on the impeller and a sealing ring provided on the housing, wherein an elastic part is provided on a contact surface of the sealing ring with the sealing tooth.

According to another aspect of the present invention, a centrifugal compressor includes the seal assembly of the first aspect.

Certain preferred embodiments will now be described by way of example only and with reference to the accompanying drawings, in which:
Fig. 1 is a schematic diagram of a seal between an impeller and a housing.
Fig. 2 is a schematic diagram of another arrangement of a seal between the impeller and the housing.
Fig. 3 is a schematic diagram of another arrangement of a seal between the impeller and the housing.
Fig. 4 is a schematic diagram of another arrangement of a seal between the impeller and the housing.
Fig. 5 is a schematic diagram of another arrangement of a the seal between the impeller and the housing.
Fig. 6 is a schematic diagram of another arrangement of a seal between the impeller and the housing.
Fig. 7 is a schematic diagram of another arrangement of a seal between the impeller and the housing.
Fig. 8 is a schematic diagram of another arrangement of a the seal between the impeller and the housing.
Fig. 9 is a schematic diagram of another arrangement of a the seal between the impeller and the housing.
Fig. 10 is a schematic diagram of another arrangement of a the seal between the impeller and the housing.
Fig. 11 is a schematic diagram of another arrangement of a the seal between the impeller and the housing.
Fig. 12 is a schematic local diagram of a centrifugal compressor.

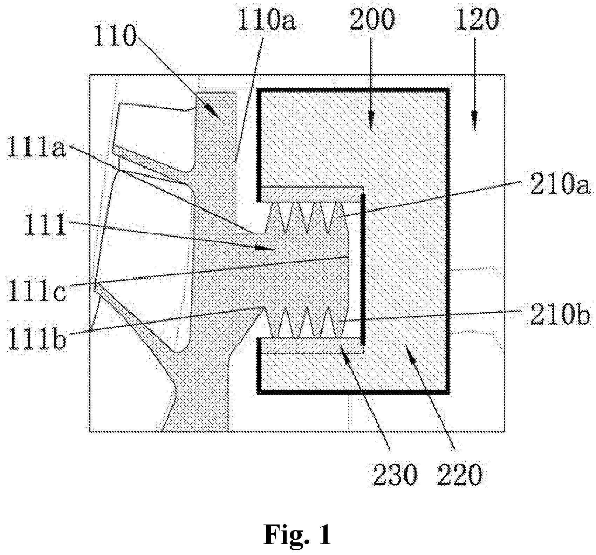

Referring to Fig. 1 to Fig. 12, several embodiments of a seal assembly for use in a centrifugal compressor 100 are shown. The centrifugal compressor 100 applying this seal assembly includes an impeller 110 and a housing 120. Specifically, the impeller 110 includes a gimbal 111 provided on the back 110a of the impeller, and the housing 120 is provided near the back 110a of the impeller 110.

The seal assembly in this embodiment includes a plurality of sets of sealing sections 200 which are used to provide a seal between the impeller 110 and the housing 120; the sealing sections 200 include sealing teeth 210a, 210b, 210c, and 210d integrally formed on the impeller 110 and a sealing ring 220 provided on the housing 120, wherein an elastic cushion 230 is provided on a contact surface of the sealing ring 220 with the sealing teeth 210a, 210b, 210c, and 210d. In such arrangement, because the plurality of sets of sealing sections 200 are designed, the sealing area between the impeller 110 and the housing 120 is effectively increased, thus improving the sealing performance thereof. In addition, the sealing teeth 210a, 210b, 210c, and 210d can keep an extremely small space or even be directly in contact with the elastic cushion 230 on the sealing ring 220, which will greatly reduce the sealing clearance and even realize a static sealing clearance of 0, thus effectively enhancing the sealing performance thereof as well.

Specifically, the below provides a conception about how to particularly arrange the plurality of sets of sealing sections.

In summary, it is possible to utilize the plurality of sets of sealing sections 200 to provide a plurality of sets of axial seals or a plurality of sets of radial seals, or provide at least one set of axial seal and at least one set of radial seal at the same time between the impeller 110 and the housing 120. For example, in the case that the arrangement space and the arrangement cost are considered, 2-4 sealing sections 200 can be provided to provide 2-4 seals between the impeller 110 and the housing 120. More specifically, the 2-4 sets of sealing sections 200 can be used to provide 1-2 axial seals and/or 1-2 radial seals between the impeller 110 and the housing 120.

Specifically, as shown in Fig. 1, the axial seal between the impeller 110 and the housing 120 includes: sealing the sealing tooth 210a on the outer diameter end face 111a of the gimbal 111 and the sealing ring 220 on the housing 120; or sealing the sealing tooth 210b on the inner diameter end face 111b of the gimbal 111 and the sealing ring 220 on the housing 120; or sealing both of the above two at the same time.

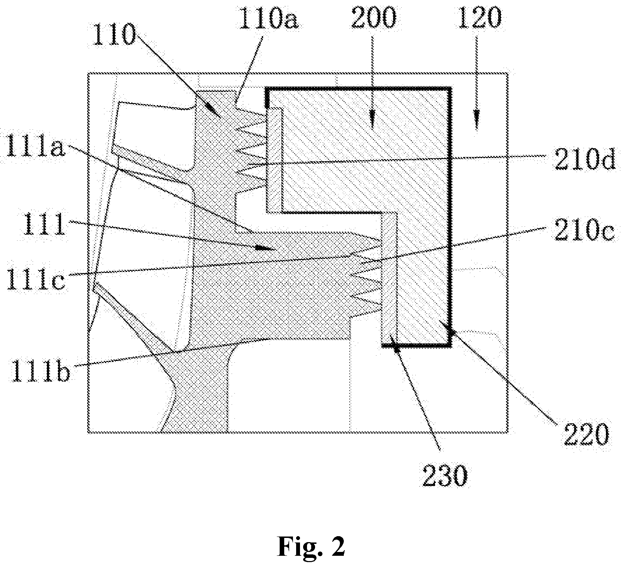

In addition, as shown in Fig. 2, the radial seal between the impeller 110 and the housing 120 includes: sealing the sealing tooth 210c on the axial end face 111c of the gimbal 111 and the sealing ring 220 on the housing 120; or sealing the sealing tooth 210d on the outside back 110a of the impeller 110 and the sealing ring 220 on the housing 120; or sealing both of the above two at the same time. As shown in Fig. 2, the outside back 110a of the impeller 110 here is located outside of the gimbal 111.

Here, specific improvements to various elements within several seal assemblies and the cooperative relationship thereof with the kit of the centrifugal compressor are also provided.

For example, the sealing tooth 210d is integrally formed on the back 110a of the impeller 110; while the sealing teeth 210a, 210b, and 210c are integrally formed on the gimbal 111. More specifically, the sealing tooth 210a is integrally formed on the outer diameter end face 111a of the gimbal 111; the sealing tooth 210b is integrally formed on the inner diameter end face 111b of the gimbal 111; and the sealing tooth 210c is integrally formed on the axial end face 111c of the gimbal 111.

As another example, the hardness of the elastic cushion 230 should be lower than the hardness of the sealing teeth 210a, 210b, 210c, and 210d, which, on the one hand, ensures that the sealing teeth can be in contact or keep an extremely small clearance with the elastic cushion, and on the other hand, also ensures that the elastic cushion has a relatively long service life. As a specific example, the elastic cushion 230 is made from soft base alloy (e.g. Babbitt metal) or high polymer material (e.g. polyether-ether-ketone, polytetrafluoroethylene) or other materials with a small friction coefficient, good creep resistance, and the hardness smaller than the impeller 110.

For another example, to reduce the number of parts, the sealing ring 220 can be integrated with the housing 120; and the elastic cushion 230 can also be integrated with the sealing ring 220. Whereas for the convenience of parts processing, the elastic cushion 230 can be made into a separate part and connected to the sealing ring 220.

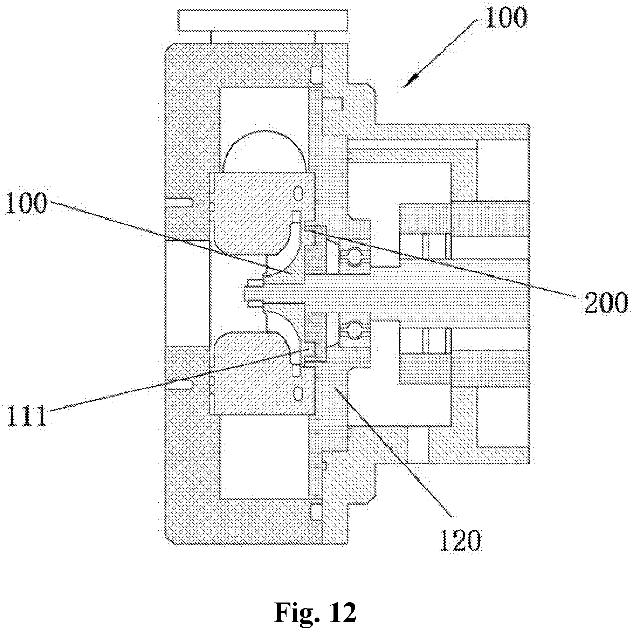

As another embodiment, referring to Fig. 12, a centrifugal compressor 100 is also provided here, which includes the seal assembly described in any of the previous embodiments. It can be known from the drawings that the seal assembly is mainly arranged between the outer edge of the impeller 110 and the housing 120; or arranged between the gimbal 111 and the housing 120; or both.

To further explain the arrangement position and arrangement manner of the sealing section within the compressor, several embodiments are provided below in conjunction with the accompanying drawings for explanation.

Fig. 1 to Fig. 6 show an embodiment having two sets of sealing sections.

Referring to Fig. 1, the sealing teeth 210a and 210b are respectively provided on the outer diameter end face 111a and the inner diameter end face 111b of the gimbal 111; and the corresponding sealing ring 220 is provided in a "]" shape so as to surround the outer diameter end face 111a and the inner diameter end face 111b of the gimbal 111. Two sealing pads 230 are respectively provided on an adjoining surface of the sealing ring 220 with the two sealing teeth 210a and 210b, thereby forming two axial seals.

Referring to Fig. 2, the sealing teeth 210c and 210d are respectively provided on the axial end face 111c of the gimbal 111 and the outside back 110a of the impeller 110; and the corresponding sealing ring 220 is provided in a "L" shape so as to surround the axial end face 111c of the gimbal 111 and the outside back 110a of the impeller 110. Two sealing pads 230 are respectively provided on the adjoining surface of the sealing ring 220 with the two sealing teeth 210c and 210d, thereby forming two radial seals.

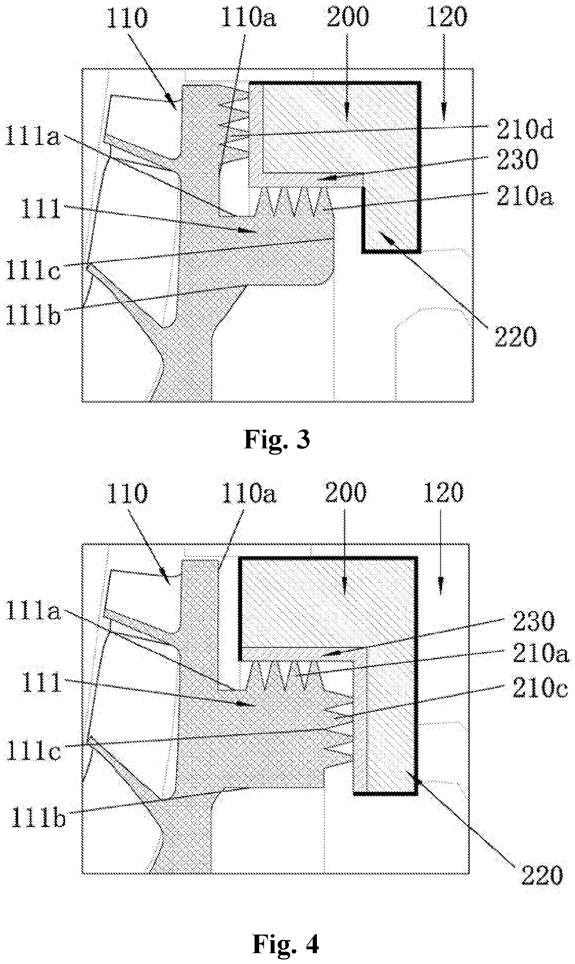

Referring to Fig. 3, the sealing teeth 210a and 210d are respectively provided on the outer diameter end face 111a of the gimbal 111 and the outside back 110a of the impeller 110; and the corresponding sealing ring 220 is provided in a "L" shape so as to surround the outer diameter end face 111a of the gimbal 111 and the outside back 110a of the impeller 110. Two sealing pads 230 are respectively provided on the adjoining surface of the sealing ring 220 with the two sealing teeth 210a and 210d, thereby forming one axial seal and one radial seal.

Referring to Fig. 4, the sealing teeth 210a and 210c are respectively provided on the outer diameter end face 111a and the axial end face 111c of the gimbal 111; and the corresponding sealing ring 220 is provided in a "L" shape so as to surround the outer diameter end face 111a and the axial end face 111c of the gimbal 111. Two sealing pads 230 are respectively provided on the adjoining surface of the sealing ring 220 with the two sealing teeth 210a and 210c, thereby forming one axial seal and one radial seal.

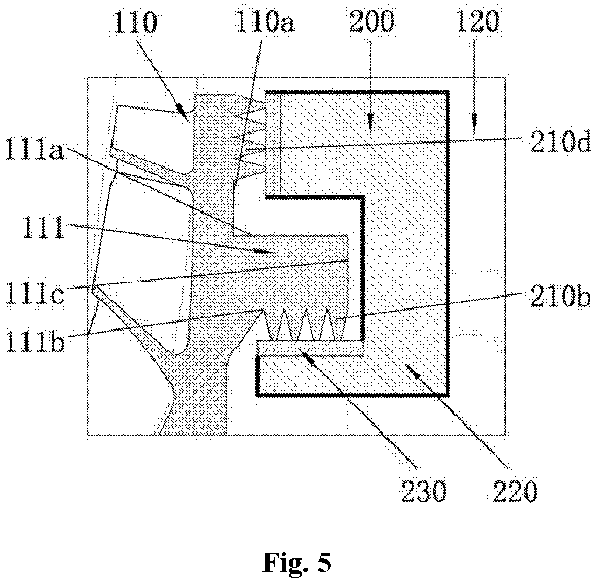

Referring to Fig. 5, the sealing teeth 210b and 210d are respectively provided on the inner diameter end face 111b of the gimbal 111 and the outside back 110a of the impeller 110; and the corresponding sealing ring 220 is provided in a "]" shape so as to surround the inner diameter end face 111b of the gimbal 111 and the outside back 110a of the impeller 110. Two sealing pads 230 are respectively provided on the adjoining surface of the sealing ring 220 with the two sealing teeth 210b and 210d, thereby forming one axial seal and one radial seal.

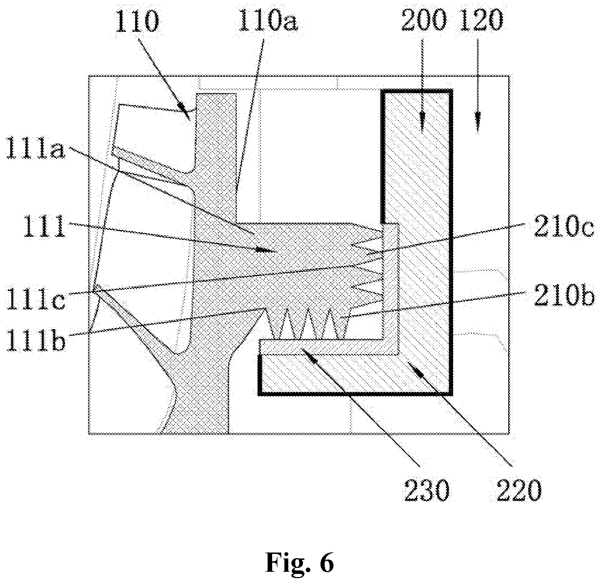

Referring to Fig. 6, the sealing teeth 210b and 210c are respectively provided on the inner diameter end face 111b and the axial end face 111c of the gimbal 111; and the corresponding sealing ring 220 is provided in a "L" shape so as to surround the inner diameter end face 111b and the axial end face 111c of the gimbal 111. Two sealing pads 230 are respectively provided on the adjoining surface of the sealing ring 220 with the two sealing teeth 210b and 210c, thereby forming one axial seal and one radial seal.

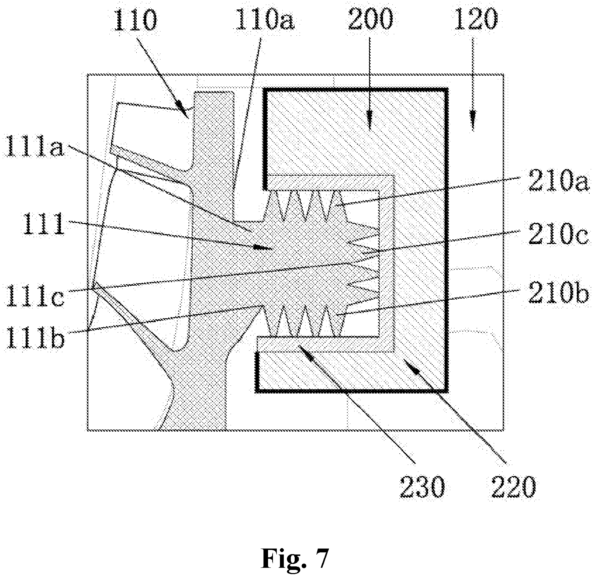

Fig. 7 to Fig. 10 show an embodiment having three sets of sealing sections.

Referring to Fig. 7, the sealing teeth 210a, 210b and 210c are respectively provided on the outer diameter end face 111a, the inner diameter end face 111b and the axial end face 111c of the gimbal 111; and the corresponding sealing ring 220 is provided in a "]" shape so as to surround the outer diameter end face 111a, the inner diameter end face 111b and the axial end face 111c of the gimbal 111. Three sealing pads 230 are respectively provided on the adjoining surface of the sealing ring 220 with the three sealing teeth 210a, 210b and 210c, thereby forming two axial seals and one radial seal.

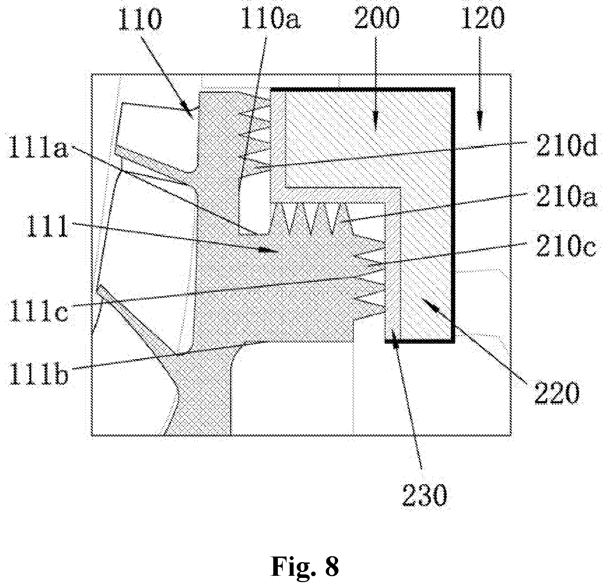

Referring to Fig. 8, the sealing teeth 210a and 210c are respectively provided on the outer diameter end face 111a and the axial end face 111c of the gimbal 111, and the sealing tooth 210d is provided on the outside back 110a of the impeller 110; and the corresponding sealing ring 220 is provided in a "L" shape so as to surround the outer diameter end face 111a and the axial end face 111c of the gimbal 111 and the outside back 110a of the impeller 110. Three sealing pads 230 are respectively provided on the adjoining surface of the sealing ring 220 with the three sealing teeth 210a, 210c and 210d, thereby forming one axial seal and two radial seals.

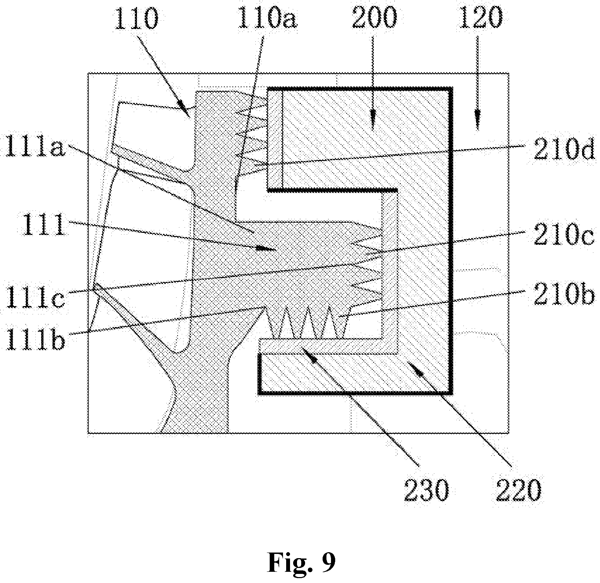

Referring to Fig. 9, the sealing teeth 210b and 210c are respectively provided on the inner diameter end face 111b and the axial end face 111c of the gimbal 111, and the sealing tooth 210d is provided on the outside back 110a of the impeller 110; and the corresponding sealing ring 220 is provided in a "]" shape so as to surround the inner diameter end face 111b and the axial end face 111c of the gimbal 111 and the outside back 110a of the impeller 110. Three sealing pads 230 are respectively provided on the adjoining surface of the sealing ring 220 with the three sealing teeth 210b, 210c and 210d, thereby forming one axial seal and two radial seals.

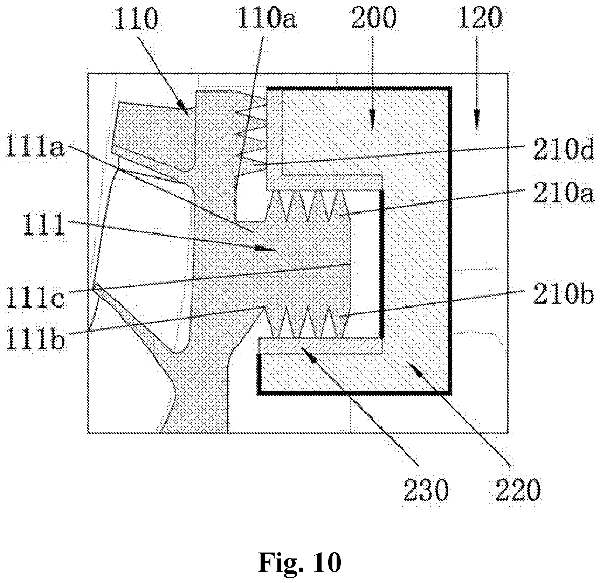

Referring to Fig. 10, the sealing teeth 210a and 210b are respectively provided on the outer diameter end face 111a and the inner diameter end face 111b of the gimbal 111, and the sealing tooth 210d is provided on the outside back 110a of the impeller 110; and the corresponding sealing ring 220 is provided in a "]" shape so as to surround the outer diameter end face 111a and the inner diameter end face 111b of the gimbal 111 and the outside back 110a of the impeller 110. Three sealing pads 230 are respectively provided on the adjoining surface of the sealing ring 220 with the three sealing teeth 210a, 210b and 210d, thereby forming two axial seals and one radial seal.

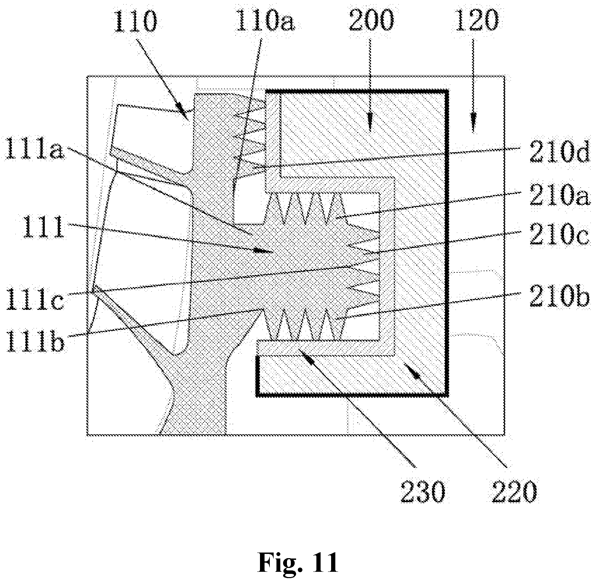

Fig. 11 shows an embodiment having four sets of sealing sections.

Referring to Fig. 11, the sealing teeth 210a, 210b and 210c are respectively provided on the outer diameter end face 111a, the inner diameter end face 111b and the axial end face 111c of the gimbal 111, and the sealing tooth 210d is provided on the outside back 110a of the impeller 110; and the corresponding sealing ring 220 is provided in a "]" shape so as to surround the outer diameter end face 111a, the inner diameter end face 111b and the axial end face 111c of the gimbal 111 and the outside back 110a of the impeller 110. Four sealing pads 230 are respectively provided on the adjoining surface of the sealing ring 220 with the four sealing teeth 210a, 210b, 210c and 210d, thereby forming two axial seals and two radial seals.

The above examples mainly explain the seal assembly for use in a centrifugal compressor and the centrifugal compressor system having same. Although only some of the implementation manners of the present invention are described, a person of ordinary skill in the art should understand that the present invention can be implemented in many other forms without deviating from the scope thereof, as defined by the claims. Therefore, the illustrated examples and implementation manners are deemed as schematic rather than restrictive, and the present invention may cover various modifications and substitutions without deviating from the scope of the present invention as defined by the attached claims.

## Claims

1. A seal assembly for use in a centrifugal compressor (100), the centrifugal compressor comprising an impeller (110) and a housing (120), wherein the impeller comprises a gimbal (111), provided on the back (110a) of the impeller, having an inner diameter and an outer diameter, wherein the seal assembly comprises:
a sealing section (200), the sealing section comprising the impeller with a sealing tooth (210a, 210b, 210c, 210d) formed on the impeller and a sealing ring (220) configured to be provided on the housing, **characterised in that** an elastic part (230) is provided on a contact surface of the sealing ring with the sealing tooth.

2. The seal assembly according to claim 1, wherein the sealing section (200) provides an axial seal and/or a radial seal between the impeller (110) and the housing (120).

3. The seal assembly according to claim 2, comprising an axial seal between the impeller (110) and the housing (120), wherein the axial seal comprises:
a seal between a sealing tooth (210a, 210b, 210c, 210d) on an outer diameter end face of the gimbal (111) and the sealing ring (220); and/or
a seal between a sealing tooth (210a, 210b, 210c, 210d) on an inner diameter end face of the gimbal (111) and the sealing ring (220).

4. The seal assembly according to claim 2, comprising a radial seal between the impeller (110) and the housing (120), wherein the radial seal comprises:
a seal between a sealing tooth (210a, 210b, 210c, 210d) on an axial end face of the gimbal (111) and the sealing ring (220); and/or
a seal between a sealing tooth (210a, 210b, 210c, 210d) on an outside back of the impeller (110) and the sealing ring (220).

5. The seal assembly according to claim 2, wherein the sealing section (200) comprises 1-2 axial sealing sections and/or 1-2 radial sealing sections between the impeller (110) and the housing (120).

6. The seal assembly according to any one of claims 1 to 5, wherein the sealing section (200) comprises 2-4 sealing sections which are used to provide 2-4 sealing sections between the impeller (110) and the housing (120).

7. The seal assembly according to any one of claims 1 to 5, wherein the sealing tooth (210a, 210b, 210c, 210d) is integrally formed on the back of the impeller (110) and/or the gimbal (111).

8. The seal assembly according to claim 7, wherein the sealing tooth (210a, 210b, 210c, 210d) is integrally formed on the inner diameter end face and/or the outer diameter end face and/or the axial end face of the gimbal (111).

9. The seal assembly according to any one of claims 1 to 5, wherein the hardness of the elastic part (230) is lower than the hardness of the sealing tooth (210a, 210b, 210c, 210d).

10. The seal assembly according to any one of claims 1 to 5, wherein the elastic part (230) is integrated with the sealing ring (220); or the elastic part is fixedly connected to the sealing ring.

11. The seal assembly according to any one of claims 1 to 5, wherein the elastic part (230) is made from soft base alloy or high polymer material.

12. The seal assembly according to any one of claims 1 to 5, wherein the sealing ring (220) is integrated with the housing (120).

13. A centrifugal compressor, comprising the seal assembly for use in a centrifugal compressor according to any one of claims 1 to 12.

## Patentansprüche

1. Dichtungsanordnung zur Verwendung in einem Radialverdichter (100), wobei der Radialverdichter ein Laufrad (110) und ein Gehäuse (120) umfasst, wobei das Laufrad einen kardanischen Bügel (111) umfasst, der auf der Rückseite (110a) des Laufrads bereitgestellt ist, der einen Innendurchmesser und einen Außendurchmesser aufweist, wobei die Dichtungsanordnung umfasst:
einen Dichtabschnitt (200), wobei der Dichtabschnitt das Laufrad mit einem Dichtzahn (210a, 210b, 210c, 210d), der auf dem Laufrad gebildet ist, umfasst, und einen Dichtring (220), der dazu konfiguriert ist, auf dem Gehäuse bereitgestellt zu sein, **dadurch gekennzeichnet, dass** ein elastisches Teil (230) auf einer Kontaktoberfläche des Dichtrings mit dem Dichtzahn bereitgestellt ist.

2. Dichtungsanordnung nach Anspruch 1, wobei der Dichtabschnitt (200) eine axiale Dichtung und/oder eine radiale Dichtung zwischen dem Laufrad (110) und dem Gehäuse (120) bereitstellt.

3. Dichtungsanordnung nach Anspruch 2, die eine axiale Dichtung zwischen dem Laufrad (110) und dem Gehäuse (120) umfasst, wobei die axiale Dichtung umfasst:
eine Dichtung zwischen einem Dichtzahn (210a, 210b, 210c, 210d) auf einer Außendurchmesserendfläche des kardanischen Bügels (111) und dem Dichtring (220), und/oder
eine Dichtung zwischen einem Dichtzahn (210a, 210b, 210c, 210d) auf einer Innendurchmesserendfläche des kardanischen Bügels (111) und dem Dichtring (220).

4. Dichtungsanordnung nach Anspruch 2, die eine radiale Dichtung zwischen dem Laufrad (110) und dem Gehäuse (120) umfasst, wobei die radiale Dichtung umfasst:
eine Dichtung zwischen einem Dichtzahn (210a, 210b, 210c, 210d) auf einer axialen Endfläche des kardanischen Bügels (111) und dem Dichtring (220); und/oder
eine Dichtung zwischen einem Dichtzahn (210a, 210b, 210c, 210d) auf einer Außenseitenrückseite des Laufrads (110) und dem Dichtring (220).

5. Dichtungsanordnung nach Anspruch 2, wobei der Dichtabschnitt (200) 1-2 axiale Dichtabschnitte und/oder 1-2 radiale Dichtabschnitte zwischen dem Laufrad (110) und dem Gehäuse (120) umfasst.

6. Dichtungsanordnung nach einem der Ansprüche 1 bis 5, wobei der Dichtabschnitt (200) 2-4 Dichtabschnitte umfasst, die verwendet werden, um 2-4 Dichtabschnitte zwischen dem Laufrad (110) und dem Gehäuse (120) bereitzustellen.

7. Dichtungsanordnung nach einem der Ansprüche 1 bis 5, wobei der Dichtzahn (210a, 210b, 210c, 210d) integral auf der Rückseite des Laufrads (110) und/oder des kardanischen Bügels (111) gebildet ist.

8. Dichtungsanordnung nach Anspruch 7, wobei der Dichtzahn (210a, 210b, 210c, 210d) integral auf der Innendurchmesserendfläche und/oder der Außendurchmesserendfläche und/oder der axialen Endfläche des kardanischen Bügels (111) gebildet ist.

9. Dichtungsanordnung nach einem der Ansprüche 1 bis 5, wobei die Härte des elastischen Teils (230) niedriger ist als die Härte des Dichtzahns (210a, 210b, 210c, 210d).

10. Dichtungsanordnung nach einem der Ansprüche 1 bis 5, wobei das elastische Teil (230) in den Dichtring (220) integriert ist; oder das elastische Teil feststehend mit dem Dichtring verbunden ist.

11. Dichtungsanordnung nach einem der Ansprüche 1 bis 5, wobei der elastische Teil (230) aus einer weichen Basislegierung oder hochpolymerem Material hergestellt ist.

12. Dichtungsanordnung nach einem der Ansprüche 1 bis 5, wobei der Dichtring (220) in das Gehäuse (120) integriert ist.

13. Radialverdichter, der die Dichtungsanordnung zur Verwendung in einem Radialverdichter nach einem der Ansprüche 1 bis 12 umfasst.

## Revendications

1. Ensemble d'étanchéité pour une utilisation dans un compresseur centrifuge (100), le compresseur centrifuge comprenant un impulseur (110) et un boîtier (120), dans lequel l'impulseur comprend un cardan (111), fourni sur l'arrière (110a) de l'impulseur, présentant un diamètre interne et un diamètre externe, dans lequel l'ensemble d'étanchéité comprend :
une section d'étanchéité (200), la section d'étanchéité comprenant l'impulseur avec une dent d'étanchéité (210a, 210b, 210c, 210d) formée sur l'impulseur et une bague d'étanchéité (220) configurée pour être fournie sur le boîtier, **caractérisé en ce qu'**une pièce élastique (230) est fournie sur une surface de contact de la bague d'étanchéité avec la dent d'étanchéité.

2. Ensemble d'étanchéité selon la revendication 1, dans lequel la section d'étanchéité (200) fournit une étanchéité axiale et/ou une étanchéité radiale entre l'impulseur (110) et le boîtier (120).

3. Ensemble d'étanchéité selon la revendication 2, comprenant une étanchéité axiale entre l'impulseur (110) et le boîtier (120), dans lequel l'étanchéité axiale comprend :
une étanchéité entre une dent d'étanchéité (210a, 210b, 210c, 210d) sur une face d'extrémité de diamètre externe du cardan (111) et la bague d'étanchéité (220) ; et/ou
une étanchéité entre une dent d'étanchéité (210a, 210b, 210c, 210d) sur une face d'extrémité de diamètre interne du cardan (111) et la bague d'étanchéité (220).

4. Ensemble d'étanchéité selon la revendication 2, comprenant une étanchéité radiale entre l'impulseur (110) et le boîtier (120), dans lequel l'étanchéité radiale comprend :
une étanchéité entre une dent d'étanchéité (210a, 210b, 210c, 210d) sur une face d'extrémité axiale du cardan (111) et la bague d'étanchéité (220) ; et/ou
une étanchéité entre une dent d'étanchéité (210a, 210b, 210c, 210d) sur une face arrière externe de l'impulseur (110) et la bague d'étanchéité (220).

5. Ensemble d'étanchéité selon la revendication 2, dans lequel la section d'étanchéité (200) comprend 1-2 sections d'étanchéité axiale et/ou 1-2 sections d'étanchéité radiale entre l'impulseur (110) et le boîtier (120).

6. Ensemble d'étanchéité selon l'une quelconque des revendications 1 à 5, dans lequel la section d'étanchéité (200) comprend 2-4 sections d'étanchéité qui sont utilisées pour fournir 2-4 sections d'étanchéité entre l'impulseur (110) et le boîtier (120).

7. Ensemble d'étanchéité selon l'une quelconque des revendications 1 à 5, dans lequel la dent d'étanchéité (210a, 210b, 210c, 210d) est formée d'un seul tenant sur la face arrière de l'impulseur (110) et/ou le cardan (111).

8. Ensemble d'étanchéité selon la revendication 7, dans lequel la dent d'étanchéité (210a, 210b, 210c, 210d) est formée d'un seul tenant sur la face d'extrémité de diamètre interne et/ou la face d'extrémité de diamètre externe et/ou la face d'extrémité axiale du cardan (111).

9. Ensemble d'étanchéité selon l'une quelconque des revendications 1 à 5, dans lequel la dureté de la pièce élastique (230) est inférieure à la dureté de la dent d'étanchéité (210a, 210b, 210c, 210d).

10. Ensemble d'étanchéité selon l'une quelconque des revendications 1 à 5, dans lequel la pièce élastique (230) est intégrée avec la bague d'étanchéité (220) ; ou la pièce élastique est raccordée de manière fixe à la bague d'étanchéité.

11. Ensemble d'étanchéité selon l'une quelconque des revendications 1 à 5, dans lequel la pièce élastique (230) est réalisée à partir d'un alliage de base tendre ou d'un matériau polymère élevé.

12. Ensemble d'étanchéité selon l'une quelconque des revendications 1 à 5, dans lequel la bague d'étanchéité (220) est intégrée avec le boîtier (120).

13. Compresseur centrifuge, comprenant l'ensemble d'étanchéité pour une utilisation dans un compresseur centrifuge selon l'une quelconque des revendications 1 à 12.
